# EUROPEAN PATENT SPECIFICATION

(11) **EP 2 084 425 B1**
(45) Date of publication and mention of the grant of the patent: **21.09.2011**
(21) Application number: 06821746.2
(22) Date of filing: 26.10.2006
(51) Int. Cl.: F16F 15/121, F16F 15/129, F16D 41/20

(54) **DAMPER-PULLEY ASSEMBLY**
DÄMPFUNGSRIEMENSCHEIBENANORDNUNG
ENSEMBLE POULIE DE VILEBREQUIN

(43) Date of publication of application: 05.08.2009
(73) Proprietor: DAYCO EUROPE S.r.l., Chieti (IT)
(72) Inventor: RIU, Hervé, 38140 La Murette (FR)
(74) Representative: Mola, Edoardo
(86) International application number: PCT/IT2006/000756
(87) International publication number: WO 2008/050359

(56) References cited:
- WO-A-2004/070225
- JP-A- 2005 180 559
- US-A- 5 156 573

## Description

### TECHNICAL FIELD

The present invention relates to a damper-pulley assembly, in particular for an accessory drive of an internal combustion engine.

A damper-pulley assembly comprises a hub adapted to be connected to a camshaft of the engine, a pulley connected to the hub and a seismic mass connected to the hub to define a dynamic torsional vibration damper.

During operation, the components of an accessory drive are critically stressed when the engine is started or stopped because, in such conditions, the angular velocity crosses the resonance speed of the accessory drive.

In conditions of resonance, the drive belt is heavily stressed and tends to slip. Consequently, noise and a significant rocking of the arm of the automatic tensioner assembled to control the tension of the belt are caused.

### BACKGROUND ART

In order to reduce such critical effects, are known damper-pulley assemblies comprising a free-wheel device allowing the belt to overrun the hub when the torque has a predetermined sign.

The free-wheel devices commonly used in this type of application are of the frictional type.

However, the free-wheel devices of the frictional type are heavily influenced by environmental conditions during which the pulley must assure coupling and uncoupling, and therefore the design of such free-wheel devices to assure the levels of reliability required by the market is difficult. JP-A-2005/80559 discloses a pulley assembly according to the preamble of claim 1.

### DISCLOSURE OF INVENTION

It is the object of the present invention to provide a damper-pulley assembly free from the aforesaid drawbacks.

The object of the present invention is achieved by a pulley assembly as defined in claim 1. Additional features of the invention are disclosed in the dependent claims.

### BRIEF DESCRIPTION OF THE DRAWINGS

For a better understanding of the present invention, a preferred embodiment will now be described only by way of non-limitative example, with reference to the accompanying drawings, in which:

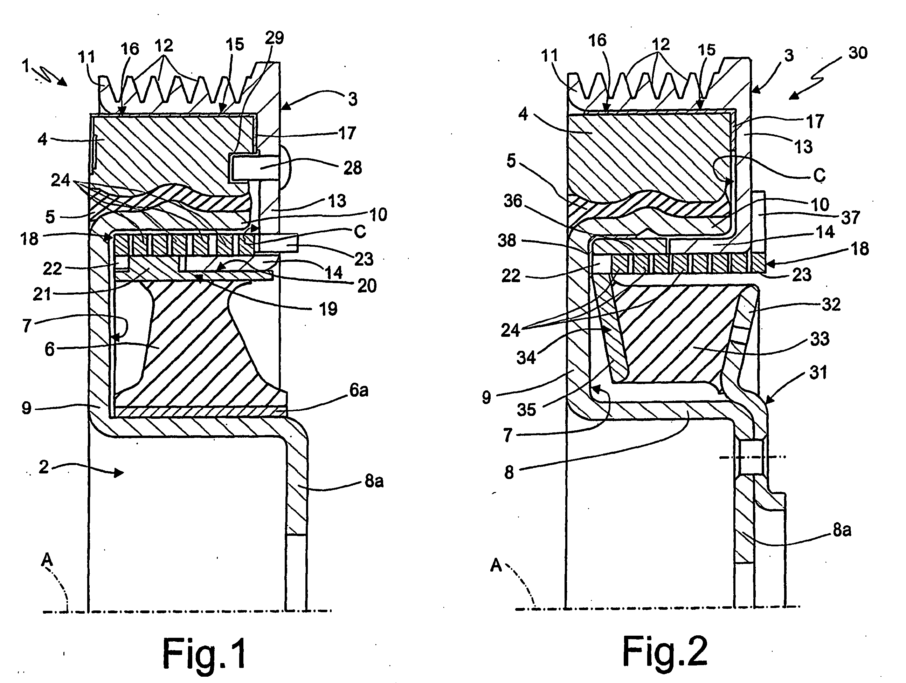

- figure 1 is a radial section of a pulley assembly according to the present invention; and
- figures from 2 to 5 are corresponding radial sections of some alternative embodiments of a pulley assembly according to the present invention.

### BEST MODE FOR CARRYING OUT THE INVENTION

In figure 1, numeral 1 indicates, as a whole, a pulley assembly comprising a hub 2 adapted to be rigidly connected to a camshaft of an internal combustion engine, a seismic mass 4 connected to hub 2 by means of an elastomeric material band 5 to define a dynamic torsional vibration damper, a pulley 3 radially supported on seismic mass 4, and an elastomeric ring 6 for rotationally connecting hub 2 to pulley 3.

Hub 2 defines an annular cavity 7 and integrally comprises a cylindrical supporting element 8 having axis A, a flange 8a exiting from supporting element 8 towards axis A, a side wall 9 radially extending from supporting element 8 from radially opposite side of flange 8a and a cylindrical wall 10 carried by side wall 9 to surround supporting element 8.

Pulley 3 is preferably formed having a single part and comprises a crown 11 coaxial to axis A and defining a plurality of grooves 12 adapted to cooperate with a belt (not shown) of an accessory drive and a side wall 13 perpendicular to axis A and exiting from a side of crown 11 toward axis A. Pulley 3 also comprises a cylindrical wall 14 exiting from side wall 13 underneath crown 11 and having a diameter smaller than that of cylindrical wall 10 of hub 2 to define a cavity C at least partially accommodating seismic mass 4 in axial direction.

Conveniently, pulley assembly 1 comprises a bushing 15 assembled on the periphery of seismic mass 4 and radially interposed between crown 11 and seismic mass 4 to frictionally cooperate with crown 11 and to radially support pulley 3 on seismic mass 4.

Preferably, seismic mass 4 presents an annular shape and defines a cylindrical peripheral surface 16 on which bushing 15 is assembled.

Furthermore, bushing 15 integrally comprises an internal flange 17 facing axis A and cooperating in contact in axial direction between seismic mass 4 and side wall 13 so that seismic mass 4 defines an axial reference position of pulley 3.

As shown in figure 1, pulley 3 is rotationally connected to hub 2 by means of elastomeric ring 6 and helical spring 18 accommodated at least partially within annular cavity 7. Preferably, helical spring 18 presents a low torsional stiffness not alone sufficient to allow the transmission of an active torque between hub 2 and pulley 3.

In particular, elastomeric ring 6 is rigidly connected to supporting element 8 on its internal diameter and supports on the external diameter an annular element 19.

Preferably, elastomeric ring 6 is co-moulded on an annular tape 6a press fitted onto support element 8.

Annular element 19 defines a supporting surface 20 on which cylindrical wall 14 annularly rests and comprises a contact portion 21 axially interposed between supporting surface 19 and side wall 9.

Helical spring 18 comprises an end portion 22 connected bidirectionally, for example rigidly, to contact portion 21, an end portion 23 opposite to end portion 21 and bidirectionally connected, for example by means of a rigid connection, to side wall 13 and a plurality of turns 24 wound around contact portion 21 and to cylindrical wall 14 and facing cylindrical wall 10 along the radial direction.

According to a preferred embodiment, the rigid connection is achieved by means of a joint defined between a radial protrusion carried by end portion 22 and a suitable seat carried by contact portion 21. Similarly, a protrusion of end portion 23 is assembled in a corresponding through hole obtained in side wall 13.

Preferably, contact portion 21 and cylindrical wall 14 define respective cylindrical contact surfaces having respective essentially identical external diameters and turns 24 presents a cross section having an essentially straight portion facing towards the contact surfaces.

Preferably, pulley assembly 1 also comprises a safety device to allow the rotational connection between hub 2 and pulley 3 in the event of breakage or damage to the helical spring 18.

The safety device comprises an axial pin 28 rigidly connected to side wall 13 and accommodated within a groove 29 defined by seismic mass 4.

In particular, groove 29 is an arc of circumference and defines two opposed stops which are angularly distanced so that pin 28 is induced to freely slide during each condition of operation when helical spring 18 is not damaged. For example, groove 29 may subtend a 180° degree arc.

Figures from 2 to 5 respectively show damper-pulley assemblies 30, 40, 50 and 60 embodying further embodiments of the present invention.

In particular, the elements of damper-pulley assemblies 30, 40, 50 and 60 which are identical or functionally equivalent to the elements of damper-pulley assembly 1 are indicated with the same numerals.

Pulley assembly 30 comprises a hub 2, a pulley 3 and a dynamic damper identical to those of pulley assembly 1.

Pulley assembly 30 also comprises a disc 31 which is rigidly connected to flange 8a and has a peripheral portion 32 for at least partially closing annular cavity 7.

Pulley assembly 30 also comprises an elastomeric ring 33 rigidly connected to peripheral portion 32 and an annular element 34 connected to elastomeric ring 33 on the opposite axial side of peripheral portion 32 within annular cavity 7.

In particular, annular element 34 comprises a connection wall 35 coupled directly to elastomeric ring 33 and a cylindrical wall 36 extending from connection wall 35 to at least partially surround elastomeric ring 33.

In the embodiment shown in figure 2, cylindrical walls 14 and 36 are radially interposed between turns 24 and cylindrical surface 10 of hub 2 and define respective internal cylindrical contact surfaces having preferably the same diameter in order to cooperate with turns 24.

Furthermore, end portion 22 is rigidly connected to annular element 34 by means of a protrusion inserted in an appropriate seat defined by the connection wall 35 and the end portion 23 displays a flange 37 rigidly connected, for example, by welding.

Preferably, cylindrical wall 10 defines a radial portion of annular element 35 and a bushing 38 is radially interposed between cylindrical walls 14 and 36 and axially between a portion of connection wall 35 and side wall 9.

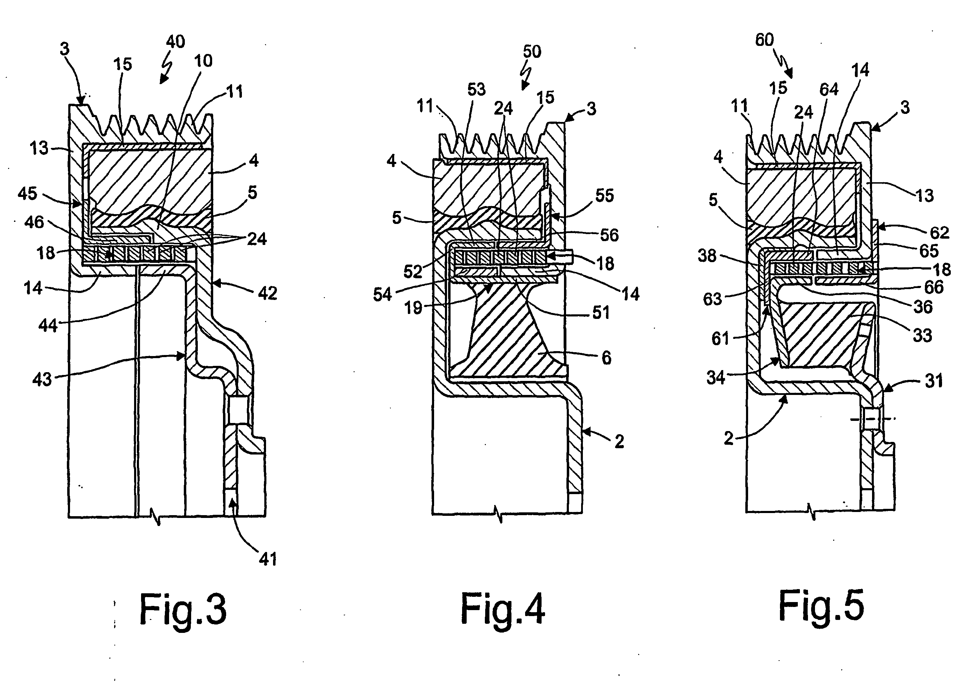

Figure 3 shows a damper-pulley assembly 40 for start-stop engine applications.

In particular, damper-pulley assembly 40 does not contemplate a low-stiffness elastic ring because in some start-stop applications torsional vibrations have a limited amplitude.

Damper-pulley assembly 40 comprises a hub 41 connected to seismic mass 4 by means of band 5, pulley 3 supported radially on seismic mass 4 by means of bushing 15 and helical spring 18 connected as previously described both to hub 2 and to pulley 3.

To allow the operation of a start-stop drive, hub 41 comprises a first and a second supporting element 42 and 43 preferably formed by moulding and rigidly connected to each other. Supporting element 42 defines cylindrical wall 10 which supports band 5 and supporting element 43 defines a supplementary cylindrical wall 44 concentric and radially internal to cylindrical wall 10 so that helical spring 18 is radially interposed between cylindrical walls 10 and 44.

Similarly, pulley 3 integrally defines cylindrical wall 14 and comprises an annular element 45 rigidly connected to side wall 13 within cavity C.

Annular element 45 presents an 'L'-shaped cross section and defines a supplementary cylindrical wall 46 concentric to cylindrical wall 14 so that helical spring 18 is radially interposed between cylindrical walls 14, 46 and that supplementary cylindrical wall 46 is radially interposed between helical spring 18 and cylindrical wall 10.

Preferably, supplementary cylindrical wall 46 is accommodated in a seat obtained by localised decrease of the thickness of cylindrical wall 10.

Figure 4 shows a pulley assembly 50 for a start-stop drive comprising an elastomeric ring 6 and a structure similar to pulley assembly 1 in figure 1.

However, in order to allow start-stop operation, annular element 19 presents a 'C'-shaped cross section defined by a wall 51 connected to elastomeric ring 6, a side wall 52 perpendicular to axis A and a cylindrical wall 53 radially external to wall 51. Helical spring 18 is connected to side wall 52 according to the method envisaged for pulley assembly 1 and is radially interposed between wall 51 and cylindrical wall 53.

Wall 51 radially supports cylindrical wall 14 of pulley 3 in a rotationally free manner and is rigidly connected to a ring 54 having an external diameter identical to that of cylindrical wall 14.

Pulley 3 also comprises an annular element 55 connected to pulley 3 like the annular element 45 of pulley assembly 40.

Furthermore, annular element 55 defines a supplementary cylindrical wall 56 having an internal diameter identical to that of cylindrical wall 53 and arranged on radially opposite part with respect to that of cylindrical wall 14 relative to helical spring 18.

Figure 5 shows a pulley assembly 60 for a start-stop drive having a structure similar to that of pulley assembly 30.

In particular, pulley assembly 60 comprises a first and a second annular element 61 and 62 which both have an 'L'-shaped cross section.

Annular element 61 preferably comprises in a single part a side wall 63 transversal to axis A and rigidly connected to annular element 34 and a supplementary cylindrical wall 64 concentric to cylindrical wall 36 and arranged on radially opposite part of cylindrical wall 36 itself with respect to helical spring 18.

Furthermore, in pulley assembly 60, bushing 38 is interposed between annular element 61 and hub 2.

Annular element 62 preferably comprises in a single piece a supplementary cylindrical wall 66 having an external diameter identical to that of cylindrical wall 36 and a flange 65 rigidly connected to side wall 13 of pulley 3.

Helical spring 18 is connected as previously described to pulley 3 by means of annular element 62 and to annular element 34 by means of annular element 61 and is radially interposed between supplementary cylindrical wall 66 and cylindrical wall 14.

Preferably, all the previously described elements, except for spiral spring 18, bushings 15 and 38 may also be formed by metal and shaped by means of cold forming operations, for example by pressing.

The operation of pulley assembly 1 is as follows.

When a torque having a first direction so that the turns 24 tend to wind up is applied between hub 2 and pulley 3, turns 24 reduce their diameter and wind in contact with contact portion 21 and cylindrical wall 14. In this condition, the radial pressure exerted by turns 24 is proportional to the relative angular position of end portions 22, 23 and therefore to the transmitted torque value. Furthermore, the internal stress of turns 24 is a traction stress while flexural stress is substantially null.

When turns 24 are wound in contact with contact portion 21 and cylindrical wall 14, the connection between annular element 19 and pulley 3 is rotationally rigid and elastomeric ring 6 filters vibrations. For example, such operating condition occurs when the engine is running at full rate.

When, instead, a torque having a second direction opposite to the first direction is transmitted between hub 2 and pulley 3, turns 24 tend to unwind and radially move away from contact portion 21 and cylindrical wall 14.

In this condition, hub 2 is rotationally connected to pulley 3 through helical spring 18 arranged in series to elastomeric ring 6.

In particular, the torsional stiffness of helical spring 18 is much lower than that of elastomeric ring 6 and allows a relatively wide revolution of hub 2 with respect to pulley 3 and in the presence of torque peaks.

Such operating condition occurs for example during starting and stopping transients during which the torque direction is very rapidly reversed and causes peaks. The peaks are however not transmitted because hub 2 may turn relatively to pulley 3 by means of helical spring 18.

Pulley assembly 30 works in a similar manner but reversed with respect to pulley assembly 1 because helical spring 18 is radially internal with respect to cylindrical walls 14, 36.

Therefore, when the torque tends to unwind turns 24, the latter expand and come into contact with the contact surfaces to make annular element 34 rotationally integral to pulley 3.

In this condition of operation, turns 24 are compression stressed and flexion is essentially null.

Pulley assembly 40 allows to rotationally couple hub 2 to pulley 3 in both directions of rotation and allows a free rotation of pulley 3 with respect to hub 2 for a predetermined number of revolutions.

In particular, hub 2 and pulley 3 are rotationally connected both when turns 24 are traction loaded and are unwound at the same time around cylindrical wall 14 and supplementary cylindrical wall 44, and when they are compression loaded and at the same time radially abut against supplementary cylindrical wall 46 and cylindrical wall 10:

Pulley 3 relatively rotates with respect to hub 2, when the turns are not in contact with walls 14, 44 nor with walls 10, 46.

Therefore, when the drive torque is reversed, pulley 3 and hub 2 relatively rotate for a predetermined number of revolutions which depends on the radial clearance with which helical spring 18 is fitted between walls 14, 44 and walls 10, 46.

In particular, the higher the radial clearance, the higher the number of revolutions for which hub 2 and pulley 3 may relatively turn.

Similarly, pulley assembly 50 defines the coupled condition between hub 2 and pulley 3 when turns 24 are in contact with cylindrical walls 14 and ring 54 or with supplementary cylindrical walls 53 and 56. Furthermore, when pulley 3 is coupled to hub 2, elastomeric ring 6 allows to filter the torsional vibrations generated by the camshaft.

The operation of assembly 60 is similar to that of pulley assembly 50 with the difference that elastomeric ring 33 is stressed in a substantially symmetrical manner with respect to a plane perpendicular to axis A.

As previously described, pulley assemblies 40, 50 and 60 allow to transmit power both when the electrical machine drives the camshaft and when the internal combustion engine drives the accessory drive.

During starting and stopping transients, instead, the transmitted torque is reversed in irregular manner and therefore causes the uncoupling of pulley 3 from hub 2 so as to avoid such irregularities from being transmitted to the accessory drive.

Furthermore, if helical spring 18 is damaged and prevents the rigid coupling between pulley 3 and annular element 19, pin 28 slides within the groove until it comes into contact with one of the two stops and in this way the rotational coupling between hub 2 and pulley 3 is allowed. Consequently, feeding of the accessory drive is assured, at least in emergency conditions.

The advantages that the present pulley assembly allows to obtain are the following.

The fact that the end portions 22, 23 are permanently, and in particular bidirectionally, coupled to element 29 or 34 and to pulley 3 allows a tangential coupling substantially independent of the friction coefficient variations between contact surfaces and turns 24. Indeed, the radial forces which can be reached are very high and therefore allow to compensate such variations during the entire working life of the pulley assembly.

Helical spring 18 is an extremely compact, light and cost-effective component.

Furthermore, the stress withstood by helical spring 18 is minimised because it is represented essentially by compression or traction stress.

The safety device ensures the operation in the event of damage to helical spring 18.

It is finally apparent that changes and variations can be made to the damper-pulley assemblies 1, 30, 40, 50, 60 herein described and illustrated if not thereby departing from the scope of protection of the present invention as defined in the accompanying claims.

For example, groove 29 may be carried directly by hub 2. Furthermore, elastic element connected in series to helical spring 18 may be a metallic material spiral or helical spring.

According to a further embodiment, pulley 3 is not radially supported on seismic mass 4. For example, pulley 3 of pulley assembly 30 may be supported in a combined manner with bushing 15 or exclusively by means of cylindrical wall 14 and a supporting bushing interposed between cylindrical walls 10 and 14. Preferably, supporting bushing also defines a stop to define the axial position of pulley 3 with respect to hub 2.

Optionally, cylindrical wall 36 is connected to cylindrical wall 14 so as to allow the relative rotation between annular element 34 and pulley 3. In this case, cylindrical wall 14 may extend in axial direction to reach the axial position of connection wall 35 for the purpose of defining a more precise guide for the rotation of pulley 3.

Furthermore, it may be expected that the bidirectional connection of end portions 22, 23 may have some backlash. Preferably, such backlash is in radial direction in order to favour the variation of diameter of turns 24 and avoid to define constraints which would increase the tension of elastic element 18.

Furthermore, it may be expected that pulley assemblies 1, 30 are not provided with elastomeric ring 6, 33 and end portion 22 is connected bidirectionally to hub 2. A pulley assembly thus modified is simple and cost-effective and may be used for an accessory drive of an engine in which the torsional oscillations at full rate are not particularly high.

## Claims

1. A pulley assembly (1; 30; 40; 50; 60) for a belt drive of a motor vehicle comprising a hub (2; 41) rotatable about an axis (A), a pulley (3) adapted to cooperate with a belt and connected to said hub (2; 41) to rotate about said axis (A) with respect to said hub (2; 41) a first contact element (14) carried by one of said hub (2; 41) or pulley (3), a helical element (18) having a first connecting portion (23) permanently connected to said pulley (3), a second connecting portion (22) permanently driven in rotation by means of said hub (2; 41) and at least one turn (24) interposed between said first and second connecting portion (23, 22) and configured to exert a radial pressure against said first contact element (14) when said hub (2; 41) and pulley (3) rotate relatively in a predetermined direction so as to allow the rotational coupling between said hub (2; 41) and said pulley (3) **characterized in that** it comprises a seismic mass (4) connected to said hub (2; 41) to define a dynamic damper and elastic means (6; 33) interposed between said hub (2) and said pulley (3) in order to filter the vibrations between said hub (2) and said pulley (3)..

2. A pulley assembly according to claim 1, **characterised in that** it comprises a second contact element (19; 34; 44) connected to the other of said hub (2) and pulley (3) to be driven in rotation and cooperating with said at least one turn (24) in radial direction.

3. A pulley assembly according to claim 2, **characterised in that** said second connecting portion (22) is fixedly connected with respect to said second contact element (19; 34; 44).

4. A pulley assembly according to claim 3, **characterised in that** said first connecting portion (23) is rigidly connected to said pulley (3).

5. A pulley assembly according to claim 2, **characterised in that** at least one of said first and second connecting portions (22, 23) is assembled with backlash.

6. A pulley assembly according to any one of claims 2 to 5 , **characterised in that** said hub (2) comprises a first cylindrical wall (10) coaxial to said axis (A) and **in that** said first contact element (14) is a second cylindrical wall carried by said pulley (3) and is radially internal with respect to said first cylindrical wall (10).

7. A pulley assembly according to claim 6, **characterised in that** said first cylindrical wall (10) radially supports said seismic mass (4) by means of a layer (5) of elastomeric material.

8. A pulley assembly according to claim 7, **characterised in that** said at least one turn (24) is radially interposed between said first cylindrical wall (10) and said second cylindrical wall (14).

9. A pulley assembly according to claim 7, **characterised in that** said second cylindrical wall (14) is radially interposed between said first cylindrical wall (10) and said at least one turn (24).

10. A pulley assembly according to claim 9, **characterised in that** said second contact element (34) is driven in rotation by said first cylindrical wall (10).

11. A pulley assembly according to any of the preceding claims, **characterised in that** it comprises at least a third contact element (46; 56; 66) fixedly connected to said pulley (3) so that said at least one turn (24) is radially interposed between said first contact element (14) and said third contact element (46; 56; 66).

12. A pulley assembly according to any of the preceding claims, **characterised in that** said second connecting portion (22) is connected to said elastic means (6; 33) in order to be driven in rotation.

13. A pulley assembly according to claim 12, **characterised in that** said second contact element (19; 34) is driven in rotation by said elastic means (6; 33) and **in that** it comprises a fourth contact element (53; 64) fixedly connected to said second contact element (19; 34) so that said at least one turn (24) is radially interposed between said second and fourth contact element (19; 34, 53; 64).

14. A pulley assembly according to any of the preceding claims, **characterised in that** it comprises tangential safety connection means (28, 29) to allow the rotational coupling between said pulley (3) and said hub (2; 41) in the event of damage to said helical element (18).

15. A pulley assembly according to claim 14, **characterised in that** said tangential safety connection means define a groove (29) carried by one of said pulley (3) or hub (2; 41) and a protrusion (28) fixed with respect to the other among said pulley (3) or hub (2; 41) and tangentially sliding within said groove (29) between two stop positions.

16. A pulley assembly according to any one of the proceeding claims, **characterised in that** said pulley (3) defines a crown (11) adapted to cooperate with a belt and **in that** said seismic mass (4) is radially interposed between said helical element (18) and said crown (11) in order to reduce the dimensions in axial direction.

## Patentansprüche

1. Riemenscheibenanordnung (1, 30; 40; 50; 60) für einen Riemenantrieb eines Kraftfahrzeugs mit einer Nabe (2; 41), die um eine Achse (A) drehbar ist, einer Riemenscheibe (3), die angepasst ist, um mit einem Riemen zusammenzuarbeiten, und mit der Nabe (2; 41) verbunden ist, um sich um die Achse (A) bezogen auf die Nabe (2; 41) zu drehen, einem ersten Kontaktelement (14), das entweder durch die Nabe (2; 41) oder die Riemenscheibe (3) getragen wird, einem spiralförmigen Element (18) mit einem ersten Verbindungsabschnitt (23), der dauerhaft mit der Riemenscheibe (3) verbunden ist, einem zweiten Verbindungsabschnitt (22), der dauerhaft mittels der Nabe (2; 41) in Drehung ist, und mindestens einer Windung (24), die zwischen dem ersten und zweiten Verbindungsabschnitt (23, 22) angeordnet und konfiguriert ist, um einen radialen Druck gegen das erste Kontaktelement (14) auszuüben, wenn sich die Nabe (2; 41) und die Riemenscheibe (3) relativ in einer vorbestimmten Richtung drehen, um die Drehkopplung zwischen der Nabe (2; 41) und der Riemenscheibe (3) zu ermöglichen, **dadurch gekennzeichnet, dass** sie umfasst: eine seismische Masse (4), die mit der Nabe (2; 41) verbunden ist, um einen dynamischen Dämpfer zu definieren, und ein elastisches Mittel (6; 33), das zwischen der Nabe (2) und der Riemenscheibe (3) angeordnet ist, um die Schwingungen zwischen der Nabe (2) und der Riemenscheibe (3) zu filtern.

2. Riemenscheibenanordnung gemäß Anspruch 1, **dadurch gekennzeichnet, dass** sie ein zweites Kontaktelement (19; 34; 44) umfasst, das mit dem anderen Teil, Nabe (2) oder Riemenscheibe (3), verbunden ist, um in Drehung angetrieben zu werden, und mit der mindestens einen Windung (24) in radialer Richtung zusammenarbeitet.

3. Riemenscheibenanordnung gemäß Anspruch 2, **dadurch gekennzeichnet, dass** der zweite Verbindungsabschnitt (22) bezogen auf das zweite Kontaktelement (19; 34; 44) fest verbunden ist.

4. Riemenscheibenanordnung gemäß Anspruch 3, **dadurch gekennzeichnet, dass** der erste Verbindungsabschnitt (23) mit der Riemenscheibe (3) starr verbunden ist.

5. Riemenscheibenanordnung gemäß Anspruch 2, **dadurch gekennzeichnet, dass** mindestens entweder der erste oder der zweite Verbindungsabschnitt (22, 23) mit Spiel zusammengebaut ist.

6. Riemenscheibenanordnung gemäß einem der Ansprüche 2 bis 5, **dadurch gekennzeichnet, dass** die Nabe (2) eine erste zylindrische Wand (10) umfasst, die koaxial zu der Achse (A) ist, und **dadurch**, dass das erste Kontaktelement (14) eine zweite zylindrische Wand ist, die durch die Riemenscheibe (3) getragen wird und radial innerhalb bezogen auf die erste zylindrische Wand (10) ist.

7. Riemenscheibenanordnung gemäß Anspruch 6, **dadurch gekennzeichnet, dass** die erste zylindrische Wand (10) die seismische Masse (4) radial mittels einer Schicht (5) aus elastomerem Material unterstützt.

8. Riemenscheibenanordnung gemäß Anspruch 7, **dadurch gekennzeichnet, dass** die mindestens eine Windung (24) radial zwischen der ersten zylindrischen Wand (10) und der zweiten zylindrischen Wand (14) angeordnet ist.

9. Riemenscheibenanordnung gemäß Anspruch 7, **dadurch gekennzeichnet, dass** die zweite zylindrische Wand (14) radially zwischen der ersten zylindrischen Wand (10) und der mindestens einen Windung (24) angeordnet ist.

10. Riemenscheibenanordnung gemäß Anspruch 9, **dadurch gekennzeichnet, dass** das zweite Kontaktelement (34) in Drehung durch die erste zylindrische Wand (10) angetrieben wird.

11. Riemenscheibenanordnung gemäß einem der vorhergehenden Ansprüche, **dadurch gekennzeichnet, dass** sie mindestens ein drittes Kontaktelement (46; 56; 66) umfasst, das fest mit der Riemenscheibe (3) verbunden ist, sodass die mindestens eine Windung (24) radial zwischen dem ersten Kontaktelement (14) und dem dritten Kontaktelement (46; 56; 66) angeordnet ist.

12. Riemenscheibenanordnung gemäß einem der vorhergehenden Ansprüche, **dadurch gekennzeichnet, dass** der zweite Verbindungsabschnitt (22) mit dem elastischen Mittel (6; 33) verbunden ist, um in Drehung angetrieben zu werden.

13. Riemenscheibenanordnung gemäß Anspruch 12, **dadurch gekennzeichnet, dass** das zweite Kontaktelement (19; 34) in Drehung durch das elastische Mittel (6; 33) angetrieben wird, und **dadurch**, dass es ein viertes Kontaktelement (53; 64) umfasst, das fest mit dem zweiten Kontaktelement (19; 34) verbunden ist, sodass die mindestens eine Windung (24) radial zwischen dem zweiten und vierten Kontaktelement (19; 34, 53; 64) angeordnet ist.

14. Riemenscheibenanordnung gemäß einem der vorhergehenden Ansprüche, **dadurch gekennzeichnet, dass** sie tangentiale Sicherheitsverbindungsmittel (28, 29) umfasst, um die Drehkopplung zwischen der Riemenscheibe (3) und der Nabe (2; 41) im Falle einer Beschädigung des spiralförmigen Elements (18) zu ermöglichen.

15. Riemenscheibenanordnung gemäß Anspruch 14, **dadurch gekennzeichnet, dass** die tangential Sicherheitsverbindungsmittel definieren: eine Nut (29), die entweder durch die Riemenscheibe (3) oder die Nabe (2; 41) getragen wird, und einen Vorsprung (28), der bezogen auf das andere Teil, Riemenscheibe (3) oder Nabe (2; 41), befestigt ist und tangential innerhalb der Nut (29) zwischen zwei Anschlagstellungen gleitet.

16. Riemenscheibenanordnung gemäß einem der vorhergehenden Ansprüche, **dadurch gekennzeichnet, dass** die Riemenscheibe (3) eine Krone (11) definiert, die angepasst ist, um mit einem Riemen zusammenzuarbeiten, und **dadurch**, dass die seismische Masse (4) radial zwischen dem spiralförmigen Element (18) und der Krone (11) angeordnet ist, um die Dimensionen in der axialen Richtung zu verringern.

## Revendications

1. Ensemble de poulie (1 ; 30 ; 40; 50 ; 60) destiné à une transmission par courroie d'un véhicule à moteur comprenant un moyeu (2 ; 41) pouvant tourner autour d'un axe (A), une poulie (3) conçue pour coopérer avec une courroie et reliée audit moyeu (2; 41) pour tourner autour dudit axe (A) par rapport audit moyeu (2 ; 41), un premier élément de contact (14) supporté par un premier élément parmi ledit moyeu (2; 41) ou ladite poulie (3), un élément hélicoïdal (18) ayant une première partie de raccordement (23) reliée de façon permanente à ladite poulie (3), une deuxième partie de raccordement (22) entraînée de façon permanente en rotation au moyen dudit moyeu (2; 41) et au moins une spire (24) intercalée entre lesdites première et deuxième parties de raccordement (23, 22) et configurée pour exercer une pression radiale contre ledit premier élément de contact (14) lorsque ledit moyeu (2; 41) et ladite poulie (3) tournent relativement dans un sens prédéterminé de façon à permettre l'accouplement en rotation entre ledit moyeu (2 ; 41) et ladite poulie (3), **caractérisé en ce qu'**il comprend une masse sismique (4) reliée audit moyeu (2; 41) pour définir un amortisseur dynamique et un moyen élastique (6; 33) intercalé entre ledit moyeu (2) et ladite poulie (3) de manière à filtrer les vibrations entre ledit moyeu (2) et ladite poulie (3).

2. Ensemble de poulie selon la revendication 1, **caractérisé en ce qu'**il comprend un deuxième élément de contact (19 ; 34 ; 44) relié à l'autre élément parmi ledit moyeu (2) et ladite poulie (3) pour être entraîné en rotation et coopérant avec ladite au moins une spire (24) dans une direction radiale.

3. Ensemble de poulie selon la revendication 2, **caractérisé en ce que** ladite deuxième partie de raccordement (22) est reliée de façon fixe par rapport audit deuxième élément de contact (19 ; 34 ; 44).

4. Ensemble de poulie selon la revendication 3, **caractérisé en ce que** ladite première partie de raccordement (23) est reliée de façon rigide à ladite poulie (3).

5. Ensemble de poulie selon la revendication 2, **caractérisé en ce qu'**au moins l'une desdites première et deuxième parties de raccordement (22, 23) est assemblée avec du jeu.

6. Ensemble de poulie selon l'une quelconque des revendications 2 à 5, **caractérisé en ce que** ledit moyeu (2) comprend une première paroi cylindrique (10) coaxiale par rapport audit axe (A) et **en ce que** ledit premier élément de contact (14) est une deuxième paroi cylindrique supportée par ladite poulie (3) et est interne de façon radiale par rapport à ladite première paroi cylindrique (10).

7. Ensemble de poulie selon la revendication 6, **caractérisé en ce que** ladite première paroi cylindrique (10) supporte de façon radiale ladite masse sismique (4) au moyen d'une couche (5) d'un matériau élastomère.

8. Ensemble de poulie selon la revendication 7, **caractérisé en ce que** ladite au moins une spire (24) est intercalée de façon radiale entre ladite première paroi cylindrique (10) et ladite deuxième paroi cylindrique (14).

9. Ensemble de poulie selon la revendication 7, **caractérisé en ce que** ladite deuxième paroi cylindrique (14) est intercalée de façon radiale entre ladite première paroi cylindrique (10) et ladite au moins une spire (24).

10. Ensemble de poulie selon la revendication 9, **caractérisé en ce que** ledit deuxième élément de contact (34) est entraîné en rotation par ladite première paroi cylindrique (10).

11. Ensemble de poulie selon l'une quelconque des revendications précédentes, **caractérisé en ce qu'**il comprend au moins un troisième élément de contact (46 ; 56 ; 66) relié de façon fixe à ladite poulie (3) de sorte que ladite au moins une spire (24) est intercalée de façon radiale entre ledit premier élément de contact (14) et ledit troisième élément de contact (46 ; 56 ; 66).

12. Ensemble de poulie selon l'une quelconque des revendications précédentes, **caractérisé en ce que** ladite deuxième partie de raccordement (22) est reliée audit moyen élastique (6 ; 33) de manière à être entraînée en rotation.

13. Ensemble de poulie selon la revendication 12, **caractérisé en ce que** ledit deuxième élément de contact (19 ; 34) est entraîné en rotation par ledit moyen élastique (6 ;33) et **en ce qu'**il comprend un quatrième élément de contact (53 ; 64) relié de façon fixe audit deuxième élément de contact (19 ; 34) de sorte que ladite au moins une spire (24) est intercalée de façon radiale entre lesdits deuxième et quatrième éléments de contact (19 ; 34 ; 53 ; 64).

14. Ensemble de poulie selon l'une quelconque des revendications précédentes, **caractérisé en ce qu'**il comprend un moyen de raccord de sécurité tangentiel (28, 29) pour permettre l'accouplement en rotation entre ladite poulie (3) et ledit moyeu (2 ; 41) dans le cas d'un endommagement sur ledit élément hélicoïdal (18).

15. Ensemble de poulie selon la revendication 14, **caractérisé en ce que** ledit moyen de raccord de sécurité tangentiel définit une rainure (29) portée par un premier élément parmi ladite poulie (3) ou ledit moyeu (2 ; 41) et une protubérance (28) fixée par rapport à l'autre élément parmi ladite poulie (3) ou ledit moyeu (2 ; 41) et coulissant de façon tangentielle à l'intérieur de ladite rainure (29) entre deux positions de butée.

16. Ensemble de poulie selon l'une quelconque des revendications précédentes, **caractérisé en ce que** ladite poulie (3) définit une couronne (11) conçue pour coopérer avec une courroie et **en ce que** ladite masse sismique (4) est intercalée de façon radiale entre ledit élément hélicoïdal (18) et ladite couronne (11) de manière à réduire les dimensions dans la direction axiale.
